# EUROPÄISCHE PATENTANMELDUNG

(11) **EP 4 401 395 A1**
(43) Veröffentlichungstag der Anmeldung: **17.07.2024**
(21) Anmeldenummer: 23218483.8
(22) Anmeldetag: 20.12.2023
(51) Int. Cl.: H04M 3/42, H04M 3/436

(54) **AUTHENTIZITÄTSPRÜFUNG VON KOMMUNIKATIONSPARTNERN IN EINEM KOMMUNIKATIONSNETZ**

(30) Priorität: 16.01.2023 DE 102023100866
(71) Anmelder: Vodafone GmbH, 40549 Düsseldorf (DE)
(72) Erfinder: Saget, Béatrice, 40210 Düsseldorf (DE)
(74) Vertreter: Weisbrodt, Bernd

(57) **Zusammenfassung**

Die vorliegende Erfindung betrifft ein Verfahren zur Authentizitätsprüfung von Kommunikationspartnern in einem Kommunikationsnetz, umfassend die Verfahrensschritte: Initiieren (17) eines Telefonanrufs durch einen Anrufsender, Empfangen (18) des Telefonanrufs und eines Profilinformationen des Anrufsenders repräsentierenden Zertifikats durch einen Anrufempfänger, und Anzeigen (19) wenigstens eines Teils der durch das Zertifikat repräsentierten Profilinformationen für den Anrufempfänger. Ferner betrifft die vorliegende Erfindung System zur Authentizitätsprüfung von Kommunikationspartnern in einem Kommunikationsnetz, umfassend: ein erstes Endgerät (1) eines Anrufsenders mit einer dem Anrufsender zugeordneten Rufnummer, welches dazu eingerichtet ist, einen Telefonanruf durch einen Anrufsender zu initiieren (17), und ein zweites Endgerät (2) eines designierten Anrufempfängers, welches dazu eingerichtet ist, den Telefonanruf und ein Profilinformationen des Anrufsenders repräsentierendes Zertifikat zu empfangen (18c), wobei das zweite Endgerät (2) ferner dazu eingerichtet ist, wenigstens einen Teil der durch das Zertifikat repräsentierten Profilinformationen für den designierten Anrufempfänger anzuzeigen (19). Gegenstand der vorliegenden Erfindung ist ferner eine Datenbank, welche zur Nutzung in einem erfindungsgemäßen Verfahren und/oder einem erfindungsgemäßen System eingerichtet ist, wobei diese zur Speicherung von Profilinformationen von netzeigenen Kunden bzw. Teilnehmern des Kommunikationsnetzes, Profilinformationen von netzeigenen Kunden bzw. Teilnehmern des Kommunikationsnetzes repräsentierenden Zertifikaten und/oder biometrischen Informationen von netzeigenen Kunden bzw. Teilnehmern des Kommunikationsnetzes, und/oder zur Speicherung von Profilinformationen von netzfremden Kunden bzw. Teilnehmern eines anderen Kommunikationsnetzes, Profilinformationen von netzfremden Kunden bzw. Teilnehmern eines anderen Kommunikationsnetzes repräsentierenden Zertifikaten und/oder biometrischen Informationen von netzfremden Kunden bzw. Teilnehmern eines anderen Kommunikationsnetzes vorgesehen ist.

## Beschreibung

Die vorliegende Erfindung betrifft ein Verfahren zur Authentizitätsprüfung von Kommunikationspartnern in einem Kommunikationsnetz sowie ein entsprechendes System.

Durch Techniken wie "Masquerading" und "Caller ID Spoofing" können Anrufsender eine fremde bzw. falsche Rufnummer (beispielsweise eine MSISDN oder PSTN-Nummer) im Display eines Anrufempfängers signalisieren. Dadurch wird ein Missbrauch bei Anrufen ermöglicht, beispielsweise durch Vorgabe einer fremden Identität, bei denen Unberechtigte an sensible Informationen von Angerufenen gelangen könnten.

Um die richtige Identität eines Anrufers hinter einer Rufnummer zuverlässig zu übermitteln, sind weitere universelle Faktoren - wie beispielsweise bezüglich der Biometrie des Anrufers - notwendig. Es muss ferner nachvollzogen werden können, ob eine bestimmte Rufnummer tatsächlich einen Anruf in einem Kommunikationsnetz, insbesondere in einem Mobilfunknetz oder einem Festnetz, beispielsweise mittels VolP (VolP: Voice over IP) oder dergleichen, ausführt.

Vor diesem Hintergrund liegt der vorliegenden Erfindung die Aufgabe zugrunde, eine Lösung bereitzustellen, welche es ermöglicht, die Authentizität eines Anrufers sicher und zuverlässig feststellen zu können.

Erfindungsgemäß wird diese Aufgabe gelöst durch ein Verfahren zur Authentizitätsprüfung von Kommunikationspartnern in einem Kommunikationsnetz, umfassend die folgenden Verfahrensschritte: Initiieren eines Telefonanrufs durch einen Anrufsender, Empfangen des Telefonanrufs und eines Profilinformationen des Anrufsenders repräsentierenden Zertifikats durch einen designierten Anrufempfänger, und Anzeigen wenigstens eines Teils der durch das Zertifikat repräsentierten Profilinformationen für den designierten Anrufempfänger. Unter einem designierten Anrufempfänger ist zu verstehen, dass selbige einen Anruf nicht notwendiger Weise entgegennimmt, sondern die Profilinformationen des Anrufsenders auch bei Anrufen in Abwesenheit des Profilinformationen des Anrufempfängers (nachträglich) eingesehen werden können. Eine aktive Anrufverbindung zwischen Anrufsender und Anrufempfänger ist demnach nicht erforderlich.

Der vorliegenden Erfindung liegt die Erkenntnis zugrunde, dass unter Nutzung eines Profilinformationen des Anrufsenders repräsentierenden Zertifikats dem Anrufempfänger die Authentizität des Anrufsenders zuverlässig angezeigt werden kann, insbesondere da das Zertifikat vom Anrufsender nicht manipuliert werden kann, wie es ansonsten beispielsweise mit einem separaten Senden von Profilinformationen der Fall wäre. Das Profilinformationen des Anrufsenders repräsentierende Zertifikat ermöglicht dabei zumindest seitens des Kommunikationsnetzes oder einer Datenbank eine Zuordnung der Profilinformationen anhand des Zertifikats.

Vorteilhafterweise umfasst das Verfahren ferner ein Erstellen der Profilinformationen des Anrufsenders unter Nutzung einer Rufnummer des Anrufsenders, und ein Speichern der Profilinformationen als Zertifikat durch eine erste Einrichtung des Kommunikationsnetzes. Durch Nutzung der Rufnummer, zumindest als Teil einer Profilinformation kann eine eindeutige Zuordnung seitens eines Telekommunikationsnetzbetreibers erfolgen. Als weitere Profilinformationen können beispielsweise Name, Firma, Anschrift und dergleichen, beispielsweise eine Bilddatei, vorgesehen sein. Der Anrufsender kann vorteilhafterweise bei Erstellung der Profilinformationen selbst festlegen, welche der angegebenen Informationen einem Anrufempfänger anzeigt werden sollen. Eine weitere vorteilhafte Ausgestaltung der Erfindung sieht vor, dass der Anrufsender verschiedene Profilinformationen für unterschiedliche Anrufempfänger vorgeben und auswählen kann.

Gemäß einer bevorzugten Ausgestaltung umfasst das Erstellen der Profilinformationen ferner ein Zuweisen wenigstens einer vom Anrufsender erfassten biometrischen Information zu den Profilinformationen und umfasst das Speichern der biometrischen Information. Dies hat den Vorteil, dass seitens des Kommunikationsnetzes unmittelbar auf die biometrische Information zugegriffen werden kann. Als biometrische Information kann vorteilhafterweise ein Fingerabdruck, ein Gesichtsscan, ein Irisscan undloder dergleichen, beispielsweise eine Stimme bzw. Stimmprobe, vorgesehen sein. Des Weiteren kann vorgesehen sein, dass zur Absicherung der biometrischen Information eine Vertrauensfrage, ein Passwort bzw. Code oder eine sonstige Information erfasst wird.

Vorzugsweise umfasst das Initiieren des Telefonanrufs eine Erfassung biometrischer Informationen des Anrufsenders durch ein Endgerät des Anrufsenders und eine Authentifizierung des Anrufsenders auf Basis der bzw. unter Nutzung von der ersten Einrichtung des Kommunikationsnetzes gespeicherten Profilinformationen. Dies hat den Vorteil, dass selbst bei Verlust eines Endgeräts, welches mit einer bestimmten Rufnummer betrieben wird, ein Unberechtigter selbiges nicht ohne Weiteres nutzen und sich als der eigentliche Besitzer der Rufnummer ausgeben kann. Es kann vorteilhafterweise vorgesehen sein, dass zunächst ein Fingerabdruck oder dergleichen biometrische Information bereitgestellt werden muss, dieser bzw. diese an das Kommunikationsnetz gesendet und gegenüber der dort gespeicherten biometrischen Information verifiziert wird. Erst nach erfolgreicher Verifizierung kann ein Anruf mit Profilinformationen initiiert werden. Bei Nutzung des Endgeräts durch einen Unberechtigten würde so eine Verifizierung stets scheitern. Hinzukommt, dass eine biometrische Information bei Nutzung einer Rufnummer durch mehrere Mitarbeiter-Profile (beispielsweise bei Servicenummern von Callcentern) die Zuordnung eines ausgehenden Anrufs zu einem spezifischen Mitarbeiter erlaubt.

Vorteilhafterweise erfolgt ferner ein Überprüfen der Profilinformationen durch die erste Einrichtung des Kommunikationsnetzes, vorzugsweise durch wenigstens einen Vergleich mit in einer Datenbank hinterlegten Daten, welche von der ersten Einrichtung des Kommunikationsnetzes zugänglich ist undloder welche seitens der ersten Einrichtung des Kommunikationsnetzes eingerichtet ist. Diese Einrichtung kann beispielsweise von einem Netzbetreiber betrieben werden, der ohnehin Zugriff auf Kundendaten hat. Auf diese Weise kann sichergestellt werden, dass als Profilinformationen angegebene Daten authentisch sind. Die Information über die Teilnahme eines netzinternen Kunden an dem Dienst kann vorteilhafterweise beispielsweise in der PCRF (Policy and Charging Rules Function) eines IMS (IP Multimedia Subsystem) bzw. in vergleichbaren Netzelementen eines Betreibers hinterlegt sein. Erst nach einer solchen Überprüfung kann beispielsweise eine Freigabe der Profilinformationen und eine entsprechende netzseitige Speicherung erfolgen, bevor selbige zusammen mit einer Anrufaufbausignalisierung eines Anrufs an einen Anrufempfänger gesendet werden. Ferner kann beispielsweise vorgesehen sein, dass durch den Netzbetreiber eine Überprüfung biometrischer Informationen erfolgt, wobei dies unter anderem durch einen biometrischen Ausweis geschehen kann.

Gemäß einer weiteren bevorzugten Ausgestaltung umfasst das Verfahren ferner ein Ermitteln, durch die erste oder durch eine zweite Einrichtung des Kommunikationsnetzes, ob die dem Anrufsender zugeordnete Rufnummer den Telefonanruf initiiert hat, also aktiv ist, wobei dies zum Beispiel unter Nutzung einer Common Subscriber Database (CSDb), einer Service Call Session Control Function (S-CSCF), eines Home Subscriber Servers (HSS), eines Home Location Registers (HLR), und/oder eines Next Generation Networks (NGN) geschieht. Das Anzeigen des wenigstens einen Teils der durch das Zertifikat repräsentierten Profilinformationen für den designierten Anrufempfänger erfolgt dabei im Fall eines positiven Ermittlungsergebnisses. Mit anderen Worten wird netzseitig anhand von in Echtzeit verfügbaren Daten überprüft, ob die dem Anrufsender zugeordnete Rufnummer tatsächlich gerade einen aktiven Anruf ausübt oder aufbaut, wobei dies vorzugsweise mittels S-CSCF erfolgt. Erst wenn eine solche Überprüfung positiv ist, werden dem designierten Anrufempfänger die Profilinformationen des Anrufsenders angezeigt. Erfindungsgemäß wird so vorteilhafterweise eine Plausibilitätsüberprüfung vorgenommen. Außerdem kann vorteilhafterweise zusätzlich geprüft werden, ob die Rufnummer die gerade einen Anruf aufbaut tatsächlich eine bestimmte Rufnummer, insbesondere die des Anrufempfängers (Anrufempfängerrufnummer), anruft. Insofern umfasst das Verfahren ferner vorteilhafterweise eine Überprüfung, ob der Anrufsender die Rufnummer des Anrufempfängers gerade anruft.

Gegenstand der vorliegenden Lösung ist ferner ein System zur Authentizitätsprüfung von Kommunikationspartnern in einem Kommunikationsnetz, umfassend: ein erstes Endgerät eines Anrufsenders mit einer dem Anrufsender zugeordneten Rufnummer, welches dazu eingerichtet ist, einen Telefonanruf durch einen Anrufsender mit einer dem Anrufsender zugeordneten Rufnummer zu initiieren, und ein zweites Endgerät eines Anrufempfängers, welches dazu eingerichtet ist, den Telefonanruf und wenigstens eine Profilinformation des Anrufsenders bzw. ein Profilinformationen des Anrufsenders repräsentierendes Zertifikat zu empfangen, wobei das zweite Endgerät ferner dazu eingerichtet ist, wenigstens einen Teil der Profilinformationen des Anrufsenders bzw. der durch das Zertifikat repräsentierten Profilinformationen des Anrufsenders für den Anrufempfänger anzuzeigen.

Im Falle einer Telefonie mittels eines sogenannten Callcenters oder unter Verwendung von sogenannten Rufnummernblöcken mittels Telefonanlagen sind erfindungsgemäß vorteilhafterweise folgende Verfahrensweisen vorgesehen:
Im Falle der Verwendung eines Rufnummemblocks, beispielsweise bei einem Anlagenanschluss, einem Callcenter oder einem Geschäftskunden, wird für die verwendeten Rufnummerendungen des Rufnummemblocks, jeweils ein Profil mit Profilinformationen angelegt und freigegeben.
initiiert beispielsweise ein Callcenter-Agent mit seiner eigenen Rufnummernendung einen Anruf, findet vorteilhafterweise über einen Applikationsserver in der Telefonanlage ein Mapping statt und die abgehende Rufnummer wird umgeschrieben, sodass im Display des Anrufempfängers eine Servicerufnummer erscheint.
Vorteilhafterweise können Telekommunikationsanbieter trotzdem nachvollziehen, dass der Anruf von der einen Rufnummer mit einer bestimmten Rufnummerendung getätigt wurde. Ferner können Telekommunikationsanbieter erfindungsgemäß ein Zertifikat mit der Signalisierung senden, insbesondere da vorab überprüft wird bzw. überprüft wurde, dass der Kunde Vertragspartner des Telekommunikationsanbieters ist und die einzelnen Rufnummerblöcke entsprechend auch zu diesem Kunden mit der Servicerufnummer gehören.
Vorteilhafterweise kann eine einzelne Rufnummer bzw. Rufnummerendung auch mehreren Anschlüssen bzw. deren Nutzern zugeteilt sein bzw. werden, wobei jeder Nutzer aber aufgrund individueller Biometrie bzw. biometrischer Informationen ein eigenes Profil hat. Dies ist insbesondere bei Schichtarbeit in Callcentern von Vorteil, aber auch bei Privathaushalten, die sich eine Rufnummer teilen.

Vorteilhafterweise umfasst das System ferner eine erste Einrichtung des Kommunikationsnetzes, welche dazu eingerichtet ist, vom ersten Endgerät unter Nutzung einer Rufnummer des Anrufsenders erstellte Profilinformationen zu speichern. Durch das netzseitige Vorhalten der Profilinformationen kann verhindert werden, dass diese von möglichen Unberechtigten manipuliert werden.

Gemäß einer bevorzugten Ausgestaltung ist das erste Endgerät ferner dazu eingerichtet, mittels der dem Anrufsender zugeordneten Rufnummer wenigstens eine vom Anrufsender erfasste biometrische Information den Profilinformationen zuzuweisen, vorzugsweise unter Nutzung der dem Anrufsender zugeordneten Rufnummer, und die erste Einrichtung des Kommunikationsnetzes ist ferner dazu eingerichtet, die biometrische Information zu speichern, vorzugsweise unter Nutzung der dem Anrufsender zugeordneten Rufnummer. Vorteilhafterweise erfolgt die Eingabe von biometrischen Informationen, zumindest eine erstmalige Eingabe von biometrischen Informationen, geschützt, vorteilhafterweise mittels einer Zwei-Faktor-Authentifizierung, insbesondere einer PIN (Personal Identification Number), einer zu bestätigen Zugangs-SMS, einer Passwort-Abfrage oder dergleichen Schutzmechanismus zum Identitätsnachweis eines Nutzers. Wie vorstehend erläutert, kann durch die Nutzung einer biometrischen Information sichergestellt werden, dass nur ein tatsächlich berechtigter Anrufsender einen authentifizierten Anruf initiieren kann. Des Weiteren können für den Fall, dass keine aktive Anrufverbindung zwischen Anrufsender und Anrufempfänger zustande kommen sollte, die Profilinformationen trotzdem als verpasster authentifizierter Anruf auf dem Endgerät des Anrufempfängers angezeigt werden, beispielsweise mittels einer Anrufliste des Endgerätes oder einer vergleichbaren Nachricht, beispielsweise SMS, MMS oder einer Push-Benachrichtigung (Push-Notification).

Entsprechend ist vorzugsweise das erste mit einer Rufnummer verknüpfte Endgerät ferner dazu eingerichtet, zum Initiieren des Telefonanrufs biometrische Informationen des Anrufsenders zu erfassen und an die erste Einrichtung des Kommunikationsnetzes zu übermitteln, wobei die erste Einrichtung des Kommunikationsnetzes ferner dazu eingerichtet ist, den Anrufsender auf Basis der von der ersten Einrichtung des Kommunikationsnetzes gespeicherten Profilinformationen zu authentifizieren. Demnach kann bei Verlust eines Endgeräts, welches mit einer bestimmten Rufnummer betrieben wird, ein Unberechtigter selbiges nicht ohne Weiteres zum Initiieren eines authentifizierte Profilinformationen übermittelnden Anrufs nutzen. Das Endgerät mit biometrischer Information und/oder Rufnummer kann vorteilhafterweise auch ein sogenanntes Smartphone, ein Laptop bzw. Notebook mit SIM, also SIM-Karte oder eSIM sein.

Ferner kann das erste Endgerät auch eine Telefonanlage ohne SIM bzw. eSIM, aber mit zugeordneter bzw. zuordbarer Rufnummer sein, beispielsweise im Falle eines Callcenters. Auch kann das erste Endgerät insofern ein Endgerät eines Festnetzanschlusses mit zugeordneter bzw. zuordbarer Rufnummer sein.

Vorteilhafterweise ist das erfindungsgemäße System ferner dazu eingerichtet zu überprüfen, ob der Anrufsender die Rufnummer des Anrufempfängers gerade anruft.

Das erfindungsgemäße System undloder deren Einrichtungen sind vorteilhafterweise eingerichtet undloder ausgebildet, ein erfindungsgemäßes Verfahren auszuführen oder in einem erfindungsgemäßen Verfahren erfindungsgemäß eingesetzt zu werden.

Gegenstand der vorliegenden Erfindung ist ferner eine Datenbank, welche zur Nutzung in einem erfindungsgemäßen Verfahren undloder einem erfindungsgemäßen System eingerichtet ist, wobei diese zur Speicherung von Profilinformationen von netzeigenen Kunden bzw. Teilnehmern des Kommunikationsnetzes, Profilinformationen von netzeigenen Kunden bzw. Teilnehmern des Kommunikationsnetzes repräsentierenden Zertifikaten undloder biometrischen Informationen von netzeigenen Kunden bzw. Teilnehmern des Kommunikationsnetzes, und/oder zur Speicherung von Profilinformationen von netzfremden Kunden bzw. Teilnehmern eines anderen Kommunikationsnetzes, Profilinformationen von netzfremden Kunden bzw. Teilnehmern eines anderen Kommunikationsnetzes repräsentierenden Zertifikaten und/oder biometrischen Informationen von netzfremden Kunden bzw. Teilnehmern eines anderen Kommunikationsnetzes vorgesehen ist. Vorteilhafterweise ist die Datenbank netzübergreifend von Kommunikationsnetzanbietern bzw. Kommunikationsnetzbetreibern nutzbar.

Weitere Einzelheiten, Merkmale undloder Vorteile der Erfindung werden nachfolgend anhand der in den Figuren der Zeichnungen dargestellten Ausführungsbeispiele näher erläutert.

Dabei zeigen:
- Fig. 1: in einem Ablaufdiagram ein Ausführungsbeispiel eines erfindungsgemäßen Verfahrens;
- Fig. 2: in einem Ablaufdiagramm ein Ausführungsbeispiel für die Erstellung von Profilinformationen; und
- Fig. 3: in einem Ablaufdiagramm ein Ausführungsbeispiel für die Nutzung von Profilinformationen bei Initiierung eines Anrufs durch einen Anrufsender.

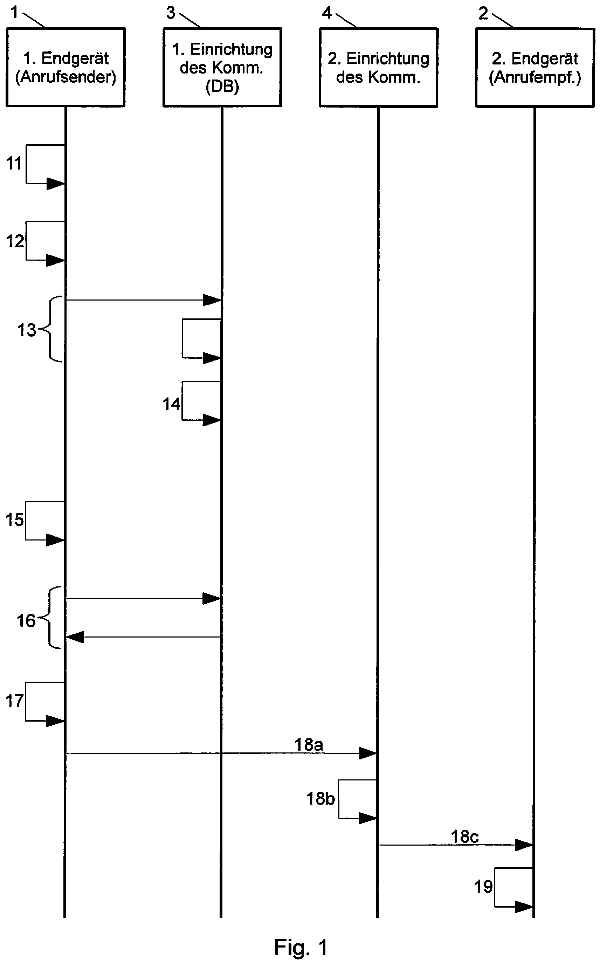

Fig. 1 zeigt in einem Ablaufdiagram ein Ausführungsbeispiel eines erfindungsgemäßen Verfahrens. Zunächst werden in Verfahrensschritt 11 Profilinformationen des Anrufsenders erstellt. Dieser Schritt erfolgt vor der eigentlichen Durchführung von Telefongesprächen, d.h. insbesondere vor deren Rufaufbau, und kann insbesondere mittels einer auf dem Endgerät des Anrufsenders installierten Applikation erfolgen. Alternativ undloder ergänzend kann dies vorteilhafterweise insbesondere auch bei Vertragsabschluss erfolgen, beispielsweise in einem Kundenshop des Kommunikationsnetzbetreibers oder über ein Online-Portal des Kommunikationsnetzbetreibers oder über einen bei diesem erfassten bzw. gelisteten Drittanbieter. Die Eingabe von biometrischen Informationen erfolgt vorteilhafterweise geschützt, insbesondere mittels einer Zwei-Faktor-Authentifizierung, insbesondere einer PIN (Personal Identification Number), einer zu bestätigen Zugangs-SMS, einer Passwort-Abfrage oder dergleichen Schutzmechanismus zum Identitätsnachweis eines Nutzers. Die Profilinformationen können beispielsweise unter Nutzung einer vertraglich festgelegten bzw. zugeteilten Rufnummer des Anrufsenders erstellt werden. Zusätzlich kann der Anrufsender weitere Daten angeben, welche einem designierten Anrufempfänger angezeigt werden sollen, beispielsweise Name, Anschrift, Firma, E-Mail-Adresse, etc.

Nachdem die Profilinformationen erstellt wurden, kann optional in Verfahrensschritt 12 ein Zuweisen wenigstens einer vom Anrufsender erfassten biometrischen Information zu den Profilinformationen erfolgen. Dies kann beispielsweise ein Fingerabdruck des Anrufsenders sein.

Die Profilinformationen oder zumindest Teile der Profilinformationen, gegebenenfalls zusammen mit der erfassten biometrischen Information, werden anschließend an eine erste Einrichtung des Kommunikationsnetzes übermittelt, welche die Profilinformationen in Verfahrensschritt 13 überprüft. Eine netzseitige Überprüfung ist dabei insbesondere vorteilhaft, da ein Betreiber der Infrastruktur des Kommunikationsnetzes, d.h. ein Telekommunikationsnetzbetreiber ohnehin Zugriff auf die Daten seiner Kunden hat, so dass Falschangaben schnell erkannt werden können.

Nach erfolgter Überprüfung werden die Profilinformationen in Verfahrensschritt 14 seitens der ersten Einrichtung 3 des Kommunikationsnetzes gespeichert, zumindest bei initialer Einrichtung, also beim ersten Mal. Die Speicherung erfolgt dabei vorzugsweise als Zertifikat, da dieses weniger einfach manipuliert werden kann. Die Verwendung eines Zertifikates ist erfindungsgemäß jedoch nicht zwingend erforderlich, so dass die Profilinformationen auch auf andere Art und Weise netzseitig vorgehalten werden können. Sofern in Verfahrensschritt 12 eine biometrische Information den Profilinformationen zugewiesen wurde, wird eine solche in Verfahrensschritt 14 zusätzlich gespeichert, um vor dem Initiieren von Telefonanrufen eine weitere Authentifizierung ermöglichen zu können.

Optional kann in Verfahrensschritt 15 dementsprechend vorgesehen sein, dass zunächst vom Anrufsender, der einen Anruf initiieren möchte, biometrische Informationen durch ein Endgerät 1 des Anrufsenders erfasst werden. Die erfassten biometrischen Informationen werden zwecks Authentifizierung des Anrufsenders in Verfahrensschritt 16 mit den netzseitig vorgehaltenen Informationen abgeglichen. Beispielsweise kann geprüft werden, ob der einer bestimmten Rufnummer zugeordnete empfangene Fingerabdruck tatsächlich mit demjenigen Fingerabdruck übereinstimmt, der für diese Rufnummer netzseitig gespeichert ist. Nur wenn dies der Fall ist, ist die Authentifizierung erfolgreich und dem Anrufsender wird das Initiieren eines Anrufs, welcher das Versenden von Profilinformationen umfasst, gestattet.

Entsprechend folgt anschließend in Verfahrensschritt 17 das Initiieren eines Telefonanrufs durch den Anrufsender. Daraufhin werden in Verfahrensschritt 18 (zumindest umfassend die Unterschritte 18a und 18c) der Telefonanruf und ein Profilinformationen des Anrufsenders repräsentierendes Zertifikat oder die Profilinformationen oder Teile der Profilinformationen durch einen Anrufempfänger empfangen.

Unter Nutzung der empfangenen Informationen wird in Verfahrensschritt 19 wenigstens ein Teil der durch das Zertifikat repräsentierten Profilinformationen für den Anrufempfänger angezeigt. Vorteilhafterweise kann beispielsweise bereits bevor eine Sprachverbindung mit dem Anrufempfänger hergestellt ist beim Rufaufbau über die Anrufsignalisierung oder mittels einer zu dem Rufaufbau unabhängigen Push-Nachricht das Zertifikats oder Teile der Profilinformationen dem Anrufempfänger angezeigt werden. Das Zertifikat bzw. die Profilinformationen zeigen dem Anrufempfänger somit an, dass der Anrufsender authentisch ist. Die Anzeige kann insbesondere mittels einer auf dem Endgerät des Anrufempfängers installierten Applikation erfolgen.

Als zusätzliche Sicherheitsmaßnahme kann vorgesehen sein, dass vor Signalisierung des Anrufs beim Anrufempfänger zunächst überprüft wird, ob die dem Anrufsender zugeordnete Rufnummer tatsächlich aktiv ist, also tatsächlich gerade mit der Rufnummer einen Anruf ausübt oder aufbaut. Hierzu wird in einem Verfahrensschritt 18b, beispielsweise unter Einbeziehung eines S-CSCF, ermittelt, beispielsweise durch eine zweite Einrichtung 4 des Kommunikationsnetzes, ob die dem Anrufsender zugeordnete Rufnummer den Telefonanruf initiiert hat. Ferner kann in diesem Zusammenhang vorteilhafterweise überprüft werden, ob der Anrufsender die Rufnummer des Anrufempfängers gerade anruft. Zum Erhalt der entsprechenden Informationen können vorteilhafterweise eine oder mehrere der folgenden Datenbanken bzw. Server abgefragt werden, beispielsweise Common Subscriber Database (CSDb), Home Subscriber Server (HSS), Home Location Register (HLR) und/oder in einem Next Generation Network (NGN). Das Anzeigen in Verfahrensschritt 19 erfolgt dann nur im Fall eines positiven Ermittlungsergebnisses.

In Verfahrensschritt 18b kann ferner vorgesehen sein, dass u.a. ein AAA-Server (Authentication, Authorization, and Accounting-Server) zunächst prüft, wer ein Anrufsender ist, beispielsweise ob dieser Kunde des Netzbetreibers ist und berechtigt ist, den Anruf durchzuführen. Anschließend wird geprüft, ob für den Anrufsender Profilinformationen in einer entsprechenden Datenbank vorliegen und ob der Anrufsender beispielsweise ein Dienstmerkmal aktiviert hat, welches vorgibt, dass Profilinformationen einem Anrufempfänger mitzuteilen sind. Des Weiteren kann ebenfalls geprüft werden, ob der mittels Rufnummer identifizierbare Anrufempfänger Kunde des Netzbetreibers ist und ob dieser sein Endgerät eingerichtet hat, beispielsweise durch Nutzung einer entsprechenden Applikation für seine Rufnummer (ohne notwendigerweise selbst darüber hinaus gehende Profilinformationen hinterlegt zu haben), Profilinformationen empfangen zu können.

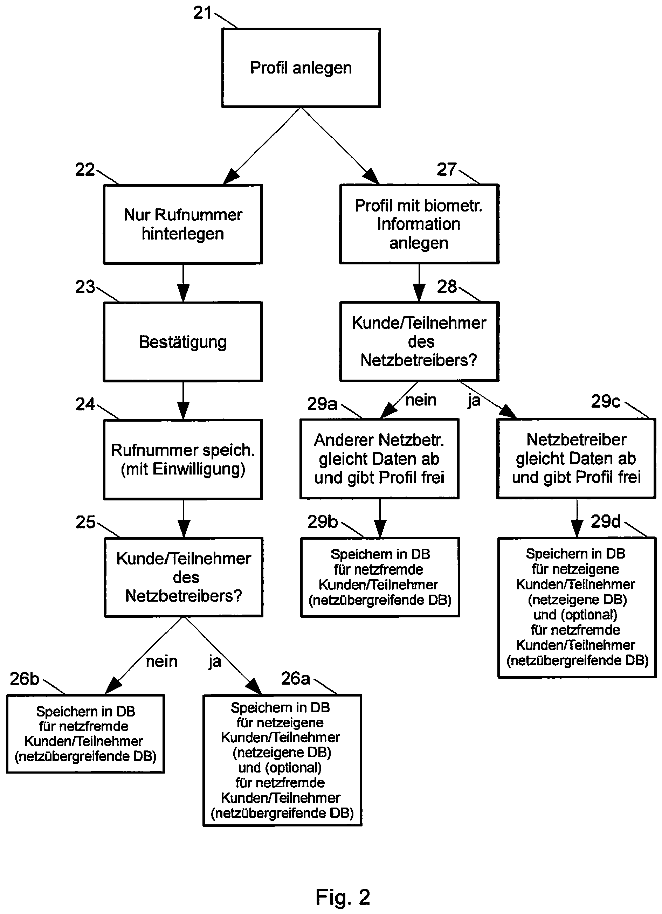

Fig. 2 zeigt in einem Ablaufdiagramm ein Ausführungsbeispiel für die Erstellung von Profilinformationen, wobei prinzipiell Profilinformationen für Nutzer des Netzbetreibers (d.h. des Betreibers des Kommunikationsnetzes) als auch Profilinformationen für Nutzer anderer Netzbetreiber erstellt werden können. Die in Zusammenhang mit Fig. 2 und/oder in Fig. 2 beschriebenen Verfahrensschritte können als Unterschritte der Verfahrensschritte 11 bis 14 gemäß Fig. 1 vorgesehen sein undloder diese ergänzen.

Zur Nutzung einer entsprechenden Applikation, welche im Rahmen einer Authentizitätsprüfung von Kommunikationspartnern in einem Kommunikationsnetz nutzbar ist, insbesondere zwecks Anlegung eines Profils, startend in Verfahrensschritt 21 kann ein Nutzer entscheiden, ob er hierzu nur eine Rufnummer hinterlegen möchte (ab Verfahrensschritt 22) oder zusätzlich eine biometrische Information hinterlegen will (ab Verfahrensschritt 27). Zunächst wird der erste der vorgenannten Fälle betrachtet.

Nachdem der Nutzer seine Rufnummer in Verfahrensschritt 22 hinterlegt hat, beispielsweise unter Nutzung einer auf seinem Endgerät installierten Applikation, kann vorgesehen sein, dass eine entsprechende Bestätigung durch Versenden eines Sicherheitscodes, beispielsweise eines SMS-Codes, welcher zwecks Verifizierung in der Applikation einzugeben ist, erfolgt (Verfahrensschritt 23). Dies stellt sicher, dass die vom Nutzer angegebene Rufnummer korrekt ist und von seinem Endgerät genutzt wird, da anderenfalls der SMS-Code nicht empfangen werden könnte.

Anschließend wird in Verfahrensschritt 24 die Rufnummer des Nutzers gespeichert, wozu dieser seine Einwilligung geben kann bzw. den Nutzungsbedingungen zustimmen muss, dass Profilinformationen anderer Nutzer empfangen und/oder eigene Profilinformationen versendet werden. Der Nutzer muss insofern beispielsweise in der Applikation der Nutzungsbedingung zustimmen, dass ein Zusenden von Push-Nachrichten erlaubt ist, über die Profilinformationen beispielsweise erhaltbar sind.

In Verfahrensschritt 25 wird anhand der Rufnummer geprüft, ob der Nutzer ein Kunde des Betreibers des Kommunikationsnetzes ist. Falls dies nicht der Fall ist, werden die Profilinformationen gemäß Verfahrensschritt 26b in einer Datenbank gespeichert, auf welche auch netzfremde oder dritte Telekommunikationsanbieter zugreifen können. Vorteilhafterweise kann dazu eine Datenbank vorgesehen sein, welche ausschließlich solche für den Betreiber des Kommunikationsnetzes netzfremde Profilinformationen umfasst und auf welche neben dem Betreiber auch die netzfremden oder dritten Telekommunikationsanbieter zugreifen können. Alternativ undloder ergänzend kann auch eine einzelne Datenbank vorgesehen sein, welche Profilinformationen aller an einem erfindungsgemäßen Dienst teilnehmenden Kunden des Betreibers des Kommunikationsnetzes und der teilnehmenden Kunden netzfremder oder dritter Telekommunikationsanbieter umfasst, auf welche neben dem Betreiber auch die netzfremden oder dritten Telekommunikationsanbieter vorteilhafterweise zugreifen können. Diese Datenbank ist insofern vorteilhafterweise netzübergreifend nutzbar bzw. eine netzübergreifend nutzbare Datenbank.

Ist der Nutzer hingegen Kunde des Betreibers des Kommunikationsnetzes, erfolgt in Verfahrensschritt 26a eine Speicherung in einer Datenbank für Kunden des Netzbetreibers, welche insofern eine Datenbank für netzeigene Kunden des Netzbetreibers ist und auf die auch nur der Netzbetreiber Zugriff hat. Beispielweise kann eine Speicherung im AAA-Server des Betreibers oder in anderen bereits im Telekommunikationsnetz vorhandenen Servern bzw. Datenbanken, wie z.B. CSDb, HSS, HLR, oder anderen Datenbanken bzw. Servern in einem NGN erfolgen. Zusätzlich kann vorteilhafterweise auch eine Speicherung in der vorgenannten netzübergreifenden Datenbank, welche für den Betreiber des Kommunikationsnetzes netzfremde Profilinformationen umfasst, auf welche auch die netzfremden oder dritten Telekommunikationsanbieter zur Realisierung eines erfindungsgemäßen Dienstes vorteilhafterweise zugreifen können, insbesondere zum Abrufen von Profilinformationen bzw. zum Einstellen von Profilinformationen von deren Kunden. Das Einstellen von Profilinformationen in der netzübergreifenden Datenbank von netzfremden oder dritten Telekommunikationsanbietem erfolgt vorteilhafterweise entsprechend authentifiziert bzw. überprüft, insbesondere mittels einer Zwei-Faktor-Authentifizierung, insbesondere einer PIN (Personal Identification Number), einer zu bestätigen Zugangs-SMS, einer Passwort-Abfrage oder dergleichen Schutzmechanismus zum Identitätsnachweis eines Nutzers eines netzfremden oder dritten Telekommunikationsanbieters.

Sofern sich ein Nutzer dazu entschieden hat, Profilinformationen zusätzlich mit einer biometrischen Information zu versehen, schließt sich nach Verfahrensschritt 23 und Verfahrensschritt 24 in dem Verfahrensschritt 27 die Prüfung an, ob ein Nutzer Kunde des das Kommunikationsnetz betreibenden Netzbetreibers ist (Verfahrensschritt 28).

Ist dies nicht der Fall, wird anschließend in Verfahrensschritt 29a ein Datenabgleich mit jenem anderen Netzbetreiber durchgeführt, wozu eine Freigabe der seitens des anderen Netzbetreibers gespeicherten Daten erforderlich ist (analog zu Schritt 13 in Fig. 1). Danach erfolgt in Verfahrensschritt 29b eine Speicherung der Profilinformationen in einer Datenbank, welche netzfremde Profilinformationen umfasst.

Wird in Verfahrensschritt 28 anhand der Rufnummer jedoch festgestellt, dass der Nutzer Kunde des das Kommunikationsnetz betreibenden Anbieters ist, werden anschließend in Verfahrensschritt 29c die Daten durch den (eigenen) Netzbetreiber abgeglichen und (gemäß Schritt 13 in Fig. 1) freigegeben. Danach erfolgt in Verfahrensschritt 29d eine Speicherung in einer Datenbank für Kunden des Netzbetreibers, einer sogenannten netzeigenen Datenbank, und zusätzlich auch eine Speicherung in der sogenannten netzübergreifenden Datenbank, welche Profilinformationen netzfremder oder dritter Telekommunikationsanbieter umfasst und auf welche die netzfremden oder dritten Telekommunikationsanbieter zur Realisierung eines erfindungsgemäßen Dienstes vorteilhafterweise zugreifen können.

Mit Hilfe dieser Lösung kann sichergestellt werden, dass selbst bei einem netzfremden Nutzer als Anrufsender für den zuständigen Betreiber des Fremdnetzes ersichtlich ist, dass ein Anrufempfänger die Anzeige von Profilinformationen unterstützt. Bei Kunden des Netzbetreibers, die Profilinformationen hinterlegt haben, muss beispielsweise nur ein Dienstmerkmal zusammen mit einer Rufnummer hinterlegt werden, damit andere Netzbetreiber, deren Anrufsender eine Rufnummer eines Nutzers des Netzbetreibers anrufen, ermitteln können, ob der Anrufempfänger im Netz des Netzbetreibers Profilinformationen empfangen kann. Sofern ein Anrufempfänger Kunde eines anderen Kommunikationsnetzes bzw. Kommunikationsanbieters ist bzw. diesem zugeordnet ist, erfolgt eine entsprechende Feststellung und Überprüfung, ob dieser insofern netzfremde Anrufempfänger seine Rufnummer hinterlegt hat und Profilinformationen empfangen kann anhand bzw. unter Nutzung der netzübergreifend nutzbaren Datenbank.

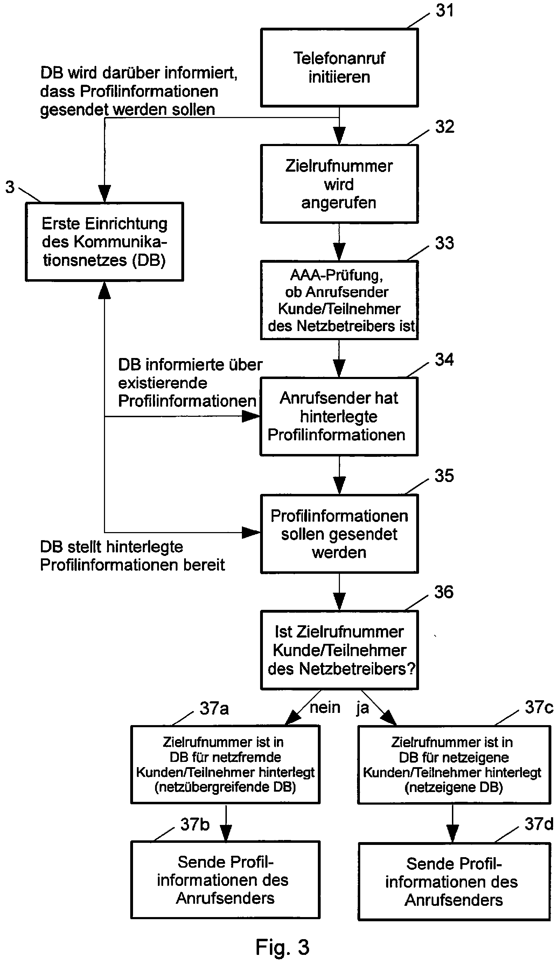

Fig. 3 zeigt in einem Ablaufdiagramm ein Ausführungsbeispiel für die Nutzung von Profilinformationen bei Initiierung eines Anrufs durch einen Anrufsender in Abhängigkeit davon, ob der Anrufempfänger zu einem netzfremden oder dritten Telekommunikationsanbieter gehört oder nicht. Dabei sind vorteilhafterweise insbesondere folgende Szenarien zur Realisierung eines erfindungsgemäßen Dienstes ermöglicht:
1. netzfremder bzw. netzexterner Anrufsender und netzeigener bzw. netzintemer Anrufempfänger;
2. netzeigener bzw. netzinterner Anrufsender und netzfremder bzw. netzexterner Anrufempfänger;
3. netzeigener bzw. netzintemer Anrufsender und netzeigener bzw. netzintemer Anrufempfänger; und/oder
4. netzfremder bzw. netzexterner Anrufsender und netzfremder bzw. netzexterner Anrufempfänger.

Die in Zusammenhang mit Fig. 3 undloder in Fig. 3 beschriebenen Verfahrensschritte können vorteilhafterweise als Unterschritte der Verfahrensschritte 17 bis 19, insbesondere als Unterschrittes des Verfahrensschritts 18b, gemäß Fig. 1 vorgesehen sein und/oder diese ergänzen.

Nach Initiierung eines Telefonanrufs durch einen Anrufsender in Verfahrensschritt 31 wird zunächst eine Anfrage an die erste Einrichtung 3 des Kommunikationsnetzes gesendet, um anzuzeigen, dass aus einer entsprechenden Datenbank Profilinformationen angefordert werden, welche an einen Anrufempfänger zu übermitteln sind.

Anschließend erfolgt in Verfahrensschritt 32 der Rufaufbau, indem die Zielrufnummer angerufen wird. Netzseitig erfolgt durch eine Einrichtung des Kommunikationsnetzes anhand der Rufnummer des Anrufsenders die Feststellung, dass der Anrufsender Kunde des Netzbetreibers ist (Verfahrensschritt 33). Hierzu wird beispielsweise ein AAA-Server involviert, welcher Zugriff auf entsprechende Datenbanken hat (CSDb, HSS, HLR, NGN), die Informationen zu netzeigenen Rufnummern bzw. netzeigenen Kunden enthalten. Der AAA-Server prüft beispielsweise ebenfalls, ob die Rufnummer berechtigt ist, einen Anruf mit Profilinformationen zu signalisieren, wozu zum Beispiel Produkt-Codes in entsprechenden Referenzdatenbanken abgerufen werden können.

Danach wird in Erwiderung auf die in Verfahrensschritt 31 gesendete Anfrage in Verfahrensschritt 34 festgestellt, dass der Anrufsender hinterlegte Profilinformationen hat, welche prinzipiell an einen Anrufempfänger gesendet werden können. Da in Verfahrensschritt 35 ermittelt wird, dass die Profilinformationen gesendet werden sollen, erfolgt eine entsprechende Bereitstellung derselben durch die erste Einrichtung 3 des Kommunikationsnetzes.

Dem schließt sich, unter Berücksichtigung des Ergebnisses aus Verfahrensschritt 33 eine Feststellung an, ob die Zielrufnummer einem Kunden des Netzbetreibers des Kommunikationsnetzes zugeordnet ist (Verfahrensschritt 36).

Falls dies nicht der Fall ist, erfolgt in Verfahrensschritt 37a ein Zugriff auf die Datenbank, welche netzfremde Profilinformationen umfasst (vgl. auch Verfahrensschritte 26b und 29b in Fig. 2). Die aus dieser Datenbank erhaltenen Profilinformationen des Anrufsenders werden in Verfahrensschritt 37b an den netzfremden Anrufempfänger gesendet.

Ist die Zielrufnummer jedoch einem Kunden des Netzbetreibers zugeordnet, erfolgt in Verfahrensschritt 37c ein Zugriff auf die Datenbank, welche für eine Speicherung von Profilinformationen für Kunden des Netzbetreibers vorgesehen ist (vgl. auch Verfahrensschritte 26a und 29d in Fig. 2). Letztlich werden die aus dieser Datenbank erhaltenen Profilinformationen des Anrufsenders in Verfahrensschritt 37d an den Anrufempfänger, der sich wie der Anrufsender ebenfalls im Kommunikationsnetz des Netzbetreibers befindet, gesendet. Ein Senden der Profilinformationen erfolgt dabei zusammen mit der Signalisierung des eingehenden Anrufs, unabhängig davon, ob dieser vom Anrufempfänger angenommen wird. Der Anrufempfänger hat also auch bei einem nicht angenommen Anruf vorteilhafterweise die Möglichkeit zu erkennen, welcher Anrufsender angerufen hat. Ferner hat der Anrufempfänger damit auch die Möglichkeit vor der eigentlichen Annahme eines Anrufs den authentifizierten Anrufsender anhand der vorab übermittelten Profilinformationen bzw. des Zertifikats zu erkennen.

Die in den Figuren der Zeichnung dargestellten Ausführungsbeispiele und die im Zusammenhang mit diesen erläuterten Ausführungsbeispiele dienen lediglich einer Erläuterung der Erfindung und sind für die nicht beschränkend.

### Bezugszeichenliste:

- 1: Erstes Endgerät / Anrufsender
- 2: Zweites Endgerät / Anrufempfänger
- 3: Erste Einrichtung des Kommunikationsnetzes
- 4: Zweite Einrichtung des Kommunikationsnetzes

- 11-19: Verfahrensschritte
- 21 - 29d: Verfahrensschritte
- 31 - 37d: Verfahrensschritte

- DB: Datenbank

## Patentansprüche

1. Verfahren zur Authentizitätsprüfung von Kommunikationspartnern in einem Kommunikationsnetz, umfassend die folgenden Verfahrensschritte:
Initiieren (17) eines Telefonanrufs durch einen Anrufsender,
Empfangen (18a, 18b 18c) des Telefonanrufs und eines Profilinformationen des Anrufsenders repräsentierenden Zertifikats durch einen designierten Anrufempfänger, und
Anzeigen (19) wenigstens eines Teils der durch das Zertifikat repräsentierten Profilinformationen für den designierten Anrufempfänger.

2. Verfahren nach Anspruch 1, ferner umfassend:
Erstellen (11) der Profilinformationen des Anrufsenders unter Nutzung einer Rufnummer des Anrufsenders, und
Speichern (14) der Profilinformationen als Zertifikat durch eine erste Einrichtung (3) des Kommunikationsnetzes.

3. Verfahren nach Anspruch 2, wobei das Erstellen (11) der Profilinformationen ferner ein Zuweisen (12) wenigstens einer vom Anrufsender erfassten biometrischen Information zu den Profilinformationen umfasst und das Speichern (14) eine Speicherung der biometrischen Information umfasst.

4. Verfahren nach Anspruch 3, wobei das Initiieren (17) des Telefonanrufs eine Erfassung (15) biometrischer Informationen des Anrufsenders durch ein Endgerät (1) des Anrufsenders und eine Authentifizierung (16) des Anrufsenders auf Basis der von der ersten Einrichtung (3) des Kommunikationsnetzes gespeicherten Profilinformationen umfasst.

5. Verfahren nach einem der Ansprüche 2 bis 4, ferner umfassend:
Überprüfen (13) der Profilinformationen durch die erste Einrichtung (3) des Kommunikationsnetzes.

6. Verfahren nach einem der Ansprüche 1 bis 5, ferner umfassend:
Ermitteln (18b), durch eine zweite Einrichtung (4) des Kommunikationsnetzes, ob die dem Anrufsender zugeordnete Rufnummer den Telefonanruf initiiert hat, unter Nutzung einer Common Subscriber Database, CSDb, einer Service Call Session Control Function, S-CSCF, eines Home Subscriber Servers, HSS, eines Home Location Registers, HLR, undloder eines Next Generation Networks, NGN,
wobei das Anzeigen (19) des wenigstens einen Teils der durch das Zertifikat repräsentierten Profilinformationen für den designierten Anrufempfänger im Fall eines positiven Ermittlungsergebnisses erfolgt.

7. Verfahren nach einem der Ansprüche 1 bis 6, ferner umfassend eine Überprüfung, ob der Anrufsender die Rufnummer des Anrufempfängers gerade anruft.

8. System zur Authentizitätsprüfung von Kommunikationspartnern in einem Kommunikationsnetz, umfassend:
ein erstes Endgerät (1) eines Anrufsenders mit einer dem Anrufsender zugeordneten Rufnummer, welches dazu eingerichtet ist, einen Telefonanruf durch einen Anrufsender zu initiieren (17), und
ein zweites Endgerät (2) eines designierten Anrufempfängers, welches dazu eingerichtet ist, den Telefonanruf und ein Profilinformationen des Anrufsenders repräsentierendes Zertifikat zu empfangen (18c),
wobei das zweite Endgerät (2) ferner dazu eingerichtet ist, wenigstens einen Teil der durch das Zertifikat repräsentierten Profilinformationen für den designierten Anrufempfänger anzuzeigen (19).

9. System nach Anspruch 8, ferner umfassend eine erste Einrichtung (3) des Kommunikationsnetzes, welche dazu eingerichtet ist, vom ersten Endgerät (1) unter Nutzung einer Rufnummer des Anrufsenders erstellte (11) Profilinformationen zu speichern (14).

10. System nach Anspruch 9, wobei das erste Endgerät (1) ferner dazu eingerichtet ist, wenigstens eine vom Anrufsender erfasste biometrische Information den Profilinformationen zuzuweisen (12) und eine erste Einrichtung (3) des Kommunikationsnetzes ferner dazu eingerichtet ist, die biometrische Information zu speichern (14).

11. System nach Anspruch 10, wobei das erste Endgerät (1) ferner dazu eingerichtet ist zum Initiieren (17) des Telefonanrufs biometrische Informationen des Anrufsenders zu erfassen (15) und an die erste Einrichtung (3) des Kommunikationsnetzes zu übermitteln, und
wobei die erste Einrichtung (3) des Kommunikationsnetzes ferner dazu eingerichtet ist, den Anrufsender auf Basis der von der ersten Einrichtung (3) des Kommunikationsnetzes gespeicherten Profilinformationen zu authentifizieren (16).

12. System nach einem der Ansprüche 8 bis 11, wobei dieses ferner dazu eingerichtet zu überprüfen, ob der Anrufsender die Rufnummer des Anrufempfängers gerade anruft.

13. System nach einem der Ansprüche 8 bis 12, wobei dieses undloder deren Einrichtungen eingerichtet sind, ein Verfahren nach einem der Ansprüche 1 bis 7 auszuführen oder in einem Verfahren nach einem der Ansprüche 1 bis 7 eingesetzt zu werden.

14. Datenbank, eingerichtet zur Nutzung in einem Verfahren nach einem der Ansprüche **1** bis 7 und/oder einem System nach einem der Ansprüche 8 bis 13, wobei diese zur Speicherung von Profilinformationen von netzeigenen Kunden bzw. Teilnehmern des Kommunikationsnetzes, Profilinformationen von netzeigenen Kunden bzw. Teilnehmern des Kommunikationsnetzes repräsentierenden Zertifikaten undloder biometrischen Informationen von netzeigenen Kunden bzw. Teilnehmern des Kommunikationsnetzes, undloder zur Speicherung von Profilinformationen von netzfremden Kunden bzw. Teilnehmern eines anderen Kommunikationsnetzes, Profilinformationen von netzfremden Kunden bzw. Teilnehmern eines anderen Kommunikationsnetzes repräsentierenden Zertifikaten undloder biometrischen Informationen von netzfremden Kunden bzw. Teilnehmern eines anderen Kommunikationsnetzes vorgesehen ist.

15. Datenbank nach Anspruch 14, wobei diese netzübergreifend von Kommunikationsnetzanbietern bzw. Kommunikationsnetzbetreibem nutzbar ist.
